# EUROPEAN PATENT APPLICATION

(11) **EP 1 583 375 A2**
(43) Date of publication of application: **05.10.2005**
(21) Application number: 04018289.1
(22) Date of filing: 02.08.2004
(51) Int. Cl.: H04Q 7/22

(54) **Information providing system, information notification apparatus and information providing apparatus**

(30) Priority: 31.03.2004 JP 2004103104
(71) Applicant: KABUSHIKI KAISHA TOSHIBA, Tokyo 105-8001 (JP)
(72) Inventor: Koyano, Kenji, Int. Property Division, Minato-ku, Tokyo 105-8001 (JP)
(74) Representative: HOFFMANN EITLE

(57) **Abstract**

If the user carrying the mobile telephone (100) rides into a vehicle and sets the ignition key in the accessory-ON state or the state of starting the engine and if the parking brake is set in the ON state or the user requests the information through the input unit (205), the information is read from the mobile telephone (100) in the radio communication and stored in the memory (207) of the information notification apparatus (200), under control of the information notification apparatus (200). The information notification apparatus (200) provides the user of the information stored in the memory (207) through the display unit (204) or the sound unit (206).

## Description

This invention relates to an information providing system capable of providing a mobile telephone user with, for example, information stored in a device which the user has with another device.

Recently, a user of a mobile telephone apparatus such as a mobile telephone has become able to easily acquire various kinds of information outdoors.
However, the information device such as the mobile telephone is small and a display unit mounted together with the information device is also small. Thus, there is a problem that if the user visually confirms the acquired information the information is very difficult to see.

In addition, if the user stores arbitrary information in the information device instead of taking notes on the information, the user may forget inputting the information in the information device and cannot effectively use the information. This problem becomes more remarkable as the amount of the information items is increased, and the user can hardly confirm existence of the information of which the user should be notified.

Conventionally, for example, the information has been acquired from the server via a communication network by a terminal mounted on a vehicle. According to this manner, if the information is acquired by the vehicle-mounted terminal or the like, the problem that the information is difficult to see can be solved since the display unit is larger than the mobile telephone.

In such an information providing system, however, since the user is provided of the information via a communication network, communication fees need to be paid. Furthermore, the vehicle-mounted terminal needs to exist within a radio zone of a base station or an environment for connection to the network, i.e. the vehicle-mounted terminal cannot be used in an underground parking area, a mountain or the like. Moreover, a security problem is also serious if the user acquires individual information through the communication network.

As described above, if the information is acquired by using the information device such as a mobile telephone, in the conventional system, the acquired information is difficult to confirm visually since the display unit is small or the user may forget existence of the information stored in the information device and cannot effectively use the information.

The present invention has been accomplished to solve the above-described problems. The object of the present invention is to provide an information providing system, an information notification apparatus and an information providing apparatus capable of allowing the user to certainly recognize information. According to an aspect of the present invention, there is provided an information providing system comprising an information providing apparatus and an information notification apparatus. The information providing apparatus comprises first communication means for conducting radio communication with the information notification apparatus, storing means for storing information, and first controlling means for controlling the first communication means such that the first communication means transmits the information stored in the storing means to the information notification apparatus. The information notification apparatus comprises second communication means for conducting radio communication with the information providing apparatus to receive the information, notification means for notifying a user of the information, and second controlling means for controlling the notification means such that the notification means notifies the user of the information received by the second communication means.

According to the present invention, the information is transmitted from the information providing apparatus to the information notification apparatus, and the notification means notifies the user of the information that the information notification apparatus receives from the information providing apparatus.

Since the user can be notified of the information stored in the information providing apparatus by the information notification apparatus, the user can certainly recognize the information.

This summary of the invention does not necessarily describe all necessary features so that the invention may also be a sub-combination of these described features.

The invention can be more fully understood from the following detailed description when taken in conjunction with the accompanying drawings, in which:
FIG. 1 is an illustration showing an information providing system according to an embodiment of the present invention;
FIG. 2 is a block diagram showing a structure of a mobile telephone shown in FIG. 1 serving as an information providing apparatus;
FIG. 3 is a block diagram showing a structure of an information notification apparatus shown in FIG. 1;
FIG. 4 is a flowchart showing operations of the information notification apparatus shown in FIG. 3;
FIG. 5 is a flowchart showing operations of the information notification apparatus shown in FIG. 3; and
FIG. 6 is a flowchart showing operations of the information notification apparatus shown in FIG. 3.

An embodiment of the present invention will be explained below with reference to the accompanying drawings.

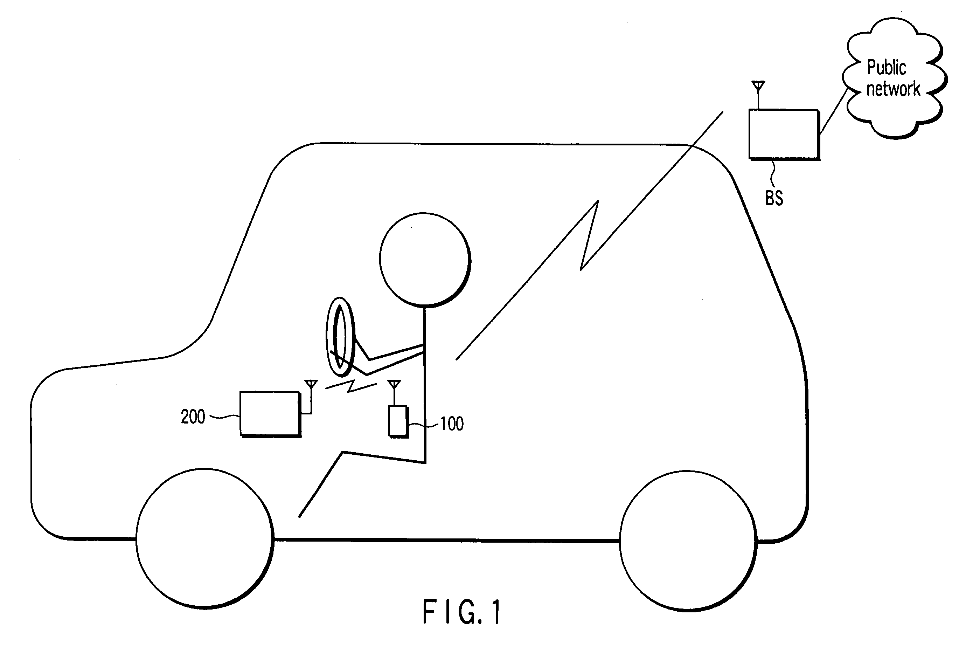

An information providing system according to the embodiment of the present invention comprises a mobile telephone 100 configured to make speech communication and data communication by radio communication with a radio base station BS accommodated in a mobile telephone network and an information notification apparatus 200 configured to provide a user with speech information and video information, as shown in FIG. 1. Mounting the information notification apparatus 200 on a vehicle is explained below. The mobile telephone 100 serves as an information providing apparatus.

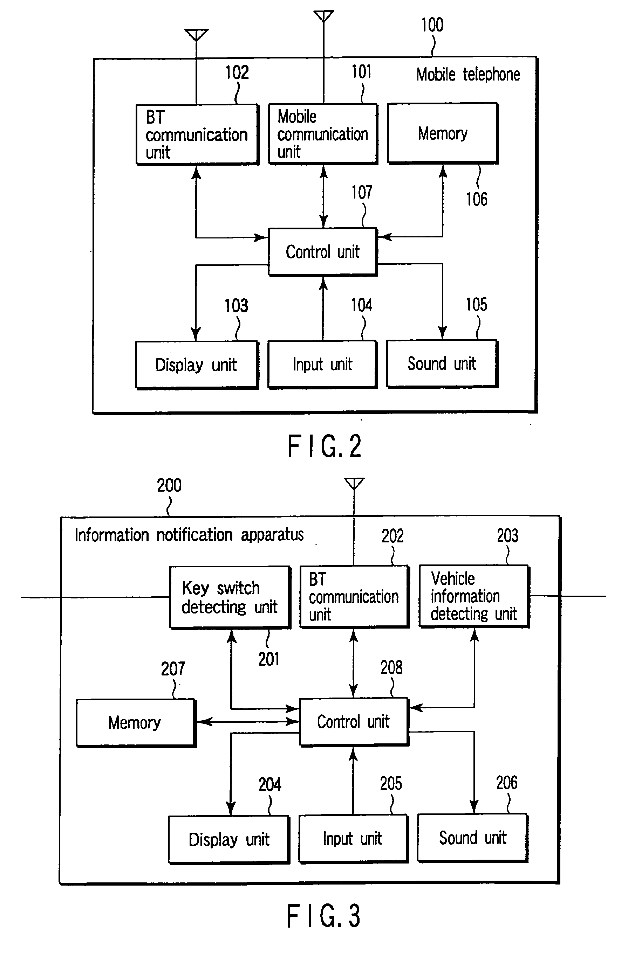

FIG. 2 shows a structure of the mobile telephone 100. The mobile telephone 100 comprises a mobile communication unit 101, a BT communication unit 102, a display unit 103, an input unit 104, a sound unit 105, a memory 106, and a control unit 107 as main constituent elements. The mobile telephone 100 also comprises a battery for operations, a microphone which inputs send speech and a speaker which outputs receive speech and music though they are not shown.

The mobile communication unit 101 conducts radio communication with a base station. If the mobile communication unit 101 conducts speech communication, it transmits and receives speech signals in a predetermined order of operations. If the mobile communication unit 101 conducts data communication, it performs data transmission and reception in a predetermined order of operations. The BT communication unit 102 conducts radio communication in a communication mode such as Bluetooth (R) that allows close-range radio communication. The BT communication unit 102 conducts data transmission and reception with the information notification apparatus 200 to be explained later.

The display unit 103 comprises an LCD (liquid crystal display) or the like to visually display the information. Specifically, the display unit 103 displays various kinds of information such as images (moving images and still images), texts and the like.

The input unit 104 comprises a plurality of key switches. The input unit 104 accepts requests and information input from the user by the key switches. The sound unit 105 outputs beeps and melodies or generates vibration by a vibrator when the mobile telephone receives an incoming call.

The memory 106 stores control programs and control data of the control unit 107, authentication data to be used in communication with the information notification apparatus 200, telephone directory data, and synchronous data and asynchronous data that the user form by the input unit 104 and the like. The synchronous data includes schedule data, shopping list data and the like, and the asynchronous data includes image data, speech message data and the like.

Automatic notification setting flags indicating whether notification should be automatically carried out in response to an instruction from the user are added to the items of the data and are stored in the memory 106. The schedule data corresponds to time information and the data of which the user should be notified at this time.

The control unit 107 controls each of the units in the mobile telephone 100. Specifically, the control unit 107 controls radio communication through the base station, display of the display unit 103, accepting the request by the input unit 104, calling by the sound unit 105, storing the text data input by the input unit 104 and the data such as images and speech received by the mobile communication unit 101, in the memory 106, converting the speech input by a microphone (not shown) into data and storing the data in the memory 106, storing the data as the synchronous data or asynchronous data when the information is stored in the memory 106.

In addition, if the control unit 107 controls the BT communication unit 102 and detects that communication with the information notification apparatus 200 can be conducted, the control unit 107 transmits the authentication data stored in the memory 106 to the information notification apparatus 200, establishes a communication link with the information notification apparatus 200, reads the synchronous data and asynchronous data (each including the automatic notification setting flags) stored in the memory 106, and transmits them to the information notification apparatus 200.

FIG. 3 shows a structure of the information notification apparatus 200. The information notification apparatus 200 comprises a key switch detecting unit 201, a BT communication unit 202, a vehicle information detecting unit 203, a display unit 204, an input unit 205, a sound unit 206, a memory 207 and a control unit 208 as main constituent elements, as shown in FIG. 3. The information notification apparatus 200 also comprises a power supply unit that receives operating power from the vehicle though it is not shown.

The key switch detecting unit 201 detects a state of an ignition key of the vehicle. For example, the key switch detecting unit 201 discriminates whether the ignition key is in accessory-ON state that allows power to be supplied to audio device and the like installed in the vehicle, and notifies the control unit 208 of the discrimination results and detection results.

The BT communication unit 202 conducts radio communication in the communication mode such as Bluetooth (R) or the like that allows close-range radio communication. Specifically, the BT communication unit 202 conducts data transmission and reception with the above-described mobile telephone 100.

The vehicle information detecting unit 203 is connected to a computer which controls the vehicle and sensors of the units. Information items such as ON/OFF state of the parking brake, opening and closing of the doors, locking of the doors, and ON/OFF state of the engine, of the information transmitted from the computer and the sensors, are input to the detecting unit 203. The detecting unit 203 detects these information items and notifies the control unit 208 of them.

The display unit 204 comprises an LCD (liquid crystal display) or the like to visually display the information. Specifically, the display unit 204 displays various kinds of information such as images (moving images and still images), texts and the like.

The input unit 205 comprises a plurality of key switches and rotary switches. The input unit 205 accepts the requests and the information input from the user, by these switches. The sound unit 206 outputs the speech and melodies.

The memory 207 stores the control programs ands control data of the control unit 208, pre-registered authentication data of the mobile telephone 100, and the synchronous data and asynchronous data received from the mobile telephone 100.

The control unit 208 controls the units of the information notification apparatus 200, and comprises a control function of recording the time. The control unit 208 also controls the BT communication unit 202 to conduct data communication with the mobile telephone 100, store the information acquitted from the data communication in the memory 207, display the information on the display unit 204 in accordance with the information stored in the memory 207, and output the speech and melodies by the sound unit 206.

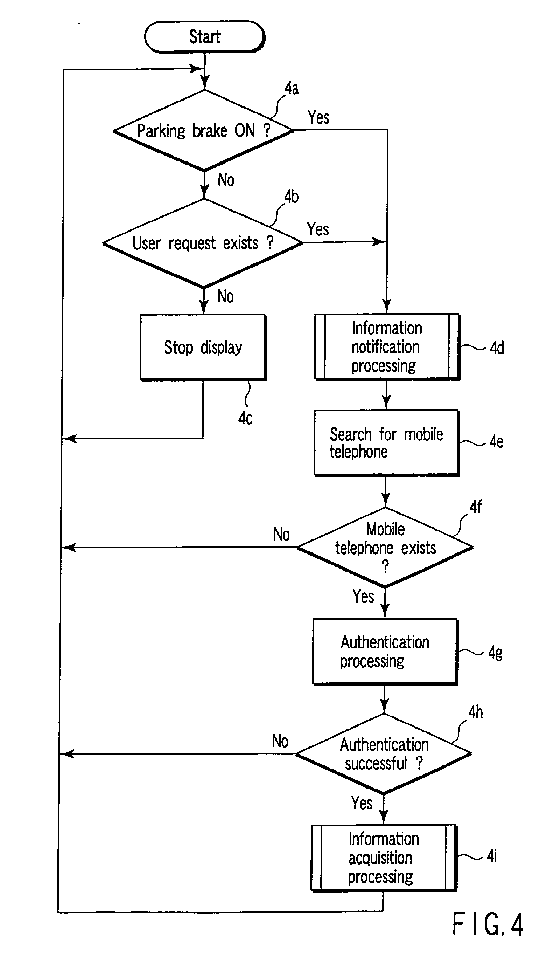

Next, an operation of the information providing system having the above-described configuration is explained. FIG. 4 shows a control flow of the information notification apparatus 200. When it is detected that the ignition key is in the accessory-ON state and the control unit 208 is notified of the detection result, the processing is started. After that, when the engine is stopped or it is detected that the ignition key is in the accessory-OFF state, the processing is ended.

First, in step 4a, the control unit 208 discriminates whether the parking brake is in the ON state (i.e. the brake is applied) on the basis of the detection result of the vehicle information detecting unit 203. If the parking brake is applied, the processing shifts to step 4d. If the parking brake is not applied, the processing shifts to step 4b.

In step 4b, the control unit 208 discriminates whether the user requests the information to be provided via the input unit 205. If the user requests the information, the processing shifts to step 4d. If the user does not request, the processing shifts to step 4c.

In step 4c, if the display unit 204 is displaying the information, the control unit 208 stops display of the information and the processing shifts to step 4a. If the information is not displayed, the processing shifts to step 4a. The control unit 208 does not stop providing audio information by the sound unit 206.

In step 4d, the control unit 208 reads the information (synchronous data and asynchronous data) from the memory 207 and conducts processing of providing the user of the information. The processing shifts to step 4e.

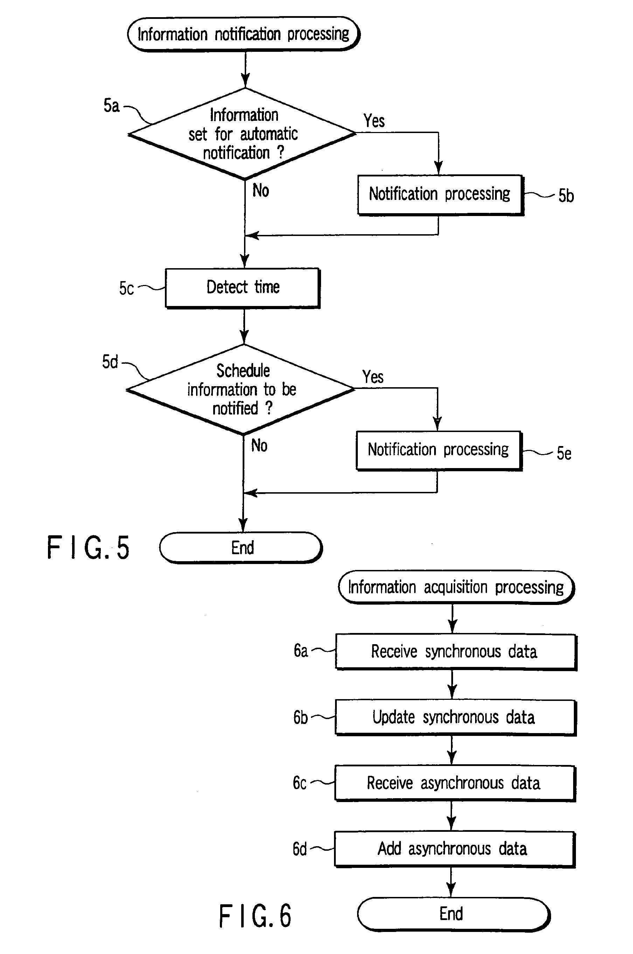

The processing of providing the user of the information is described in detail with reference to FIG. 5.

First, in step 5a, the control unit 208 refer to the automatic notification setting flags added to the synchronous data and asynchronous data that are stored in the memory 207 and discriminates whether they include the data which is set for automatic notification. If the data set for automatic notification exists, the processing shifts to step 5b. If the data set for automatic notification does not exist, the processing shifts to step 5c.

In step 5b, the control unit 208 reads the data set for automatic notification out of the data stored in the memory 207. If the data is still images, moving images and text data, the control unit 208 allows visual information based on these data items to be displayed on the display unit 204. If the data is speech and music, the control unit 208 allows audio information based on these data items to be output through the sound unit 206. Thus, the processing shifts to step 5c.

In step 5c, the control unit 208 detects a current time and the processing shifts to step 5d.

In step 5d, the control unit 208 refers to time information of schedule data, of the data stored in the memory 207, and discriminates whether the schedule data of which the user should be notified exists on the basis of the time detected in step 5c. If the schedule data of which the user should be notified exists, the processing shifts to step 5e. If the schedule data of which the user should be notified does not exist, the operation is ended and the processing shifts to step 4e.

In step 4e, the control unit 208 controls the BT communication unit 202 to attempt reception of a signal which is intermittently transmitted from the BT communication unit 102 of the mobile telephone 100 and search for the mobile telephone 100 which exists in the neighborhood.

In step 4f, if the BT communication unit 202 receives the signal transmitted from the BT communication unit 102 and detects the mobile telephone 100, the processing shifts to step 4g. If the BT communication unit 202 cannot receive the signal transmitted from the BT communication unit 102 or cannot detect the mobile telephone 100, the processing shifts to step 4a.

In step 4g, the control unit 208 controls the BT communication unit 202 to conduct communication with the BT communication unit 102 of the mobile telephone 100 and request the mobile telephone 100 to transmit the authentication data. The processing shifts to step 4h. The mobile telephone 100 reads the authentication data stored in the memory 106 and transmits the authentication data to the information notification apparatus 200 by the BT communication unit 102. The BT communication unit 202 receives and outputs the authentication data to the control unit 208.

In step 4h, the control unit 208 compares the authentication data received by the BT communication unit 202 with the authentication data stored in the memory 207 and discriminates whether both data correspond to each other. If both data correspond to each other, the processing shifts to step 4i. If the data do not correspond to each other, the processing shifts to step 4a.

In step 4i, the control unit 208 controls the BT communication unit 202 to establish a communication link with the mobile telephone 100 and conduct the information acquisition processing through the communication link.

The processing of acquiring the information from the mobile telephone 100 is described in detail with reference to FIG. 6.

First, in step 6a, the control unit 208 requests the mobile telephone 100 to transmit the synchronous data via the communication link. The control unit 107 of the mobile telephone 100 reads the synchronous data from the memory 106 and transmits the synchronous data to the information notification apparatus 200 via the communication link. The control unit 208 controls the BT communication unit 202 to receive the synchronous data thus transmitted. The processing shifts to step 6b.

In step 6b, the control unit 208 overwrites (updates) the synchronous data that has been stored in the memory 207 with the synchronous data that is newly received from the mobile telephone 100. Thus, the synchronous data stored in the memory 207 is synchronized with the synchronous data stored in the memory 106. The processing shifts to step 6c.

In step 6c, the control unit 208 requests the mobile telephone 100 to transmit the asynchronous data, via the communication link. The control unit 107 of the mobile telephone 100 reads the asynchronous data from the memory 106 and transmits the asynchronous data to the information notification apparatus 200 via the communication link. The control unit 208 controls the BT communication unit 202 to receive the asynchronous data thus transmitted. The processing shifts to step 6d.

In step 6d, the control unit 208 additionally stores the asynchronous data that has been newly received from the mobile telephone 100, in the memory 207 and ends the operations. The processing shifts to step 4a.

If the user carrying the mobile telephone 100 rides into a vehicle and sets the ignition key in the accessory-ON state or the state of starting the engine and if the parking brake is set in the ON state or the user requests the information through the input unit 205, the information is read from the mobile telephone 100 in the radio communication and stored in the memory 207 of the information notification apparatus 200, under control of the information notification apparatus 200. The information notification apparatus 200 provides the user of the information stored in the memory 207 through the display unit 204 or the sound unit 206 (step 4d of FIG. 4).

For this reason, according to the information providing system having the above-described configuration, the user is provided with the information that the user has stored in the mobile telephone 100 from the information notification apparatus 200, by a general action of merely getting into a vehicle. Thus, the user can certainly recognize the information stored in the mobile telephone 100. Since the user is notified of the information via the display unit 204 or sound unit 206 of the information notification apparatus 200, the user can therefore easily recognize the information.

After that, the information notification apparatus 200 and the mobile telephone 100 conduct the close-range radio communication with each other. The synchronous data in the memory 207 of the information notification apparatus 200 is updated with the synchronous data in the memory 106 of the mobile telephone 100 and the asynchronous data in the memory 207 is additionally stored in the memory 106 (step 4i of FIG. 4).

Thus, the data in the memory 207 of the information notification apparatus 200 is automatically updated with the data stored in the memory 106 of the mobile telephone 100 or the data stored in the memory 106 is added to the data in the memory 207. The user does not need to execute any especial operations for updating or addition of the data even if the user forgets updating or adding the data.

In addition, the visual information is notified via the display unit 204 only when the parking brake is applied. Therefore notification of the information is not conducted during the driving and safety of the vehicle is secured.

Moreover, since the mobile telephone 100 and the information notification apparatus 200 conduct direct radio communication with each other, communication costs are not borne or the use environment is not limited. Since the public communication line is not used, a security problem is not caused.

The present invention is not limited to the embodiment described above but the constituent elements of the invention can be modified in various manners without departing from the spirit and scope of the invention. Various aspects of the invention can also be extracted from any appropriate combination of a plurality of constituent elements disclosed in the embodiment. For example, some constituent elements may be deleted in all of the constituent elements disclosed in the embodiment.

In the above-described embodiment, the application of the present invention to the vehicle has been explained. However, a home electrical product such as a television, a personal computer or the like as installed indoors may be used as the information notification apparatus 200 and the user may be notified of the information transmitted from the mobile telephone 100 with the electrical product.

In the embodiment, if the information which is set for automatic notification exists (step 5a of FIG. 5) or if the schedule information to be notified on the basis of the current time exists (step 5d of FIG. 5), the user is notified of the information in steps 5b and 5e. Instead, however, the user may be notified of the fact that the information to be notified exists and then notified of the information in response to the user's request made via the input unit 205.

Furthermore, in the embodiment, the mobile telephone 100 transmits the authentication data stored in the memory 106 to the information notification apparatus 200. The information notification apparatus 200 compares the transmitted authentication data with the authentication data stored in the memory 207. If the data correspond to each other, the information notification apparatus 200 receives the information from the mobile telephone 100. In other words, the information notification apparatus 200 confirms whether the mobile telephone 100 is a pre-registered telephone and then receives the information from the mobile telephone 100.

For example, however, the information notification apparatus 200 may transmit the authentication data stored in the memory 207 to the mobile telephone 100 before receiving the information from the mobile telephone 100. The mobile telephone 100 may compare the transmitted authentication data with the authentication data stored in the memory 106 and transmit the information to the information notification apparatus 200 if the data correspond to each other. In other words, the mobile telephone 100 may confirm whether the information notification apparatus 200 is a pre-registered apparatus and then receive the information from the information notification apparatus 200.

In the embodiment, notification of the information is controlled in accordance with the ON/OFF state of the parking brake. However, notification of the information may be controlled in accordance with the opening/closing or locking of the doors.

Needless to say, the invention can also be modified in various manners without departing from the spirit and scope of the invention.

## Claims

1. An information providing system **characterized by** comprising an information providing apparatus (100) and an information notification apparatus (200),
the information providing apparatus (100) comprising:
first communication means (102) for conducting radio communication with the information notification apparatus (200) ;
storing means (106) for storing information; and
first controlling means (107) for controlling the first communication means (102) such that the first communication means (102) transmits the information stored in the storing means (106) to the information notification apparatus (200),
the information notification apparatus (200) comprising:
second communication means (202) for conducting radio communication with the information providing apparatus (100) to receive the information;
notification means (204) for notifying a user of information; and
second controlling means (208) for controlling the notification means (204) such that the notification means (204) notifies the user of the information received by the second communication means (202) .

2. The information providing system according to claim 1, **characterized in that** the information providing apparatus (100) further comprises first identification information storing means (106) for storing identification information,
the first controlling means (107) controls the first communication means (102) such that the first communication means (102) transmits the identification information stored in the first identification information storing means (106) to the information notification apparatus (200) before transmission of the information stored in the storing means (106) is controlled,
the information notification apparatus (200) further comprises second identification information storing means (207) for storing identification information, and
if the identification information received from the information providing apparatus (100) and the identification information stored in the second identification information storing means (207) correspond to each other, the second controlling means (208) controls the second communication means (202) such that the second communication means (202) receives the information from the information providing apparatus (100).

3. The information providing system according to claim 1, **characterized in that** the information notification apparatus (200) further comprises first identification information storing means (207) for storing identification information,
the second controlling means (208) controls the second communication means (202) such that the second communication means (202) transmits the identification information stored in the first identification information storing means (207) to the information providing apparatus (100) before the information is received from the information providing apparatus (100),
the information providing apparatus (100) further comprises second identification information storing means (106) for storing identification information, and
if the identification information received from the information notification apparatus (200) and the identification information stored in the second identification information storing means (106) correspond to each other, the first controlling means (107) controls the first communication means (102) such that the first communication means (102) transmits the information stored in the storing means (106) to the information notification apparatus (200).

4. The information providing system according to claim 1, **characterized in that** the information notification apparatus (200) is installed in a vehicle and further comprises stop detecting means (203) for detecting that the vehicle is stopped, and
if the stop detecting means (203) detects that the vehicle is stopped, the second controlling means (208) controls the notification means (204) such that the notification means (204) notifies the user of the information received by the second communication means (202).

5. The information providing system according to claim 1, **characterized in that** the information notification apparatus (200) further comprises:
information storing means (207) for storing the information received by the second communication means (202); and
information controlling means (208) for updating the information that the information storing means (207) has stored with the information received by the second communication means (202).

6. The information providing system according to claim 1, **characterized in that** the information notification apparatus (200) further comprises:
information storing means (207) for storing the information received by the second communication means (202); and
information controlling means (208) for storing the information received by the second communication means (202) as well as the information that the information storing means (207) has stored, in the information storing means (207).

7. The information providing system according to claim 1, **characterized in that** the information stored in the storing means (106) includes time information,
the information notification apparatus (200) further comprises timer means (208) for measuring time and information storing means (207) for storing the information received by the second communication means (202), and
the second controlling means (208) compares time information included in the information stored in the information storing means (207) with the time measured by the timer means (208) and controls the notification means (204) such that the notification means (204) notifies the user of the information stored in the information storing means (207) in accordance with a result of the comparison.

8. An information notification apparatus (200) **characterized by** comprising:
communication means (202) for conducting radio communication with an information providing apparatus (100) to receive information therefrom;
notification means (204) for notifying a user of the information; and
controlling means (208) for controlling the notification means (204) such that the notification means (204) notifies the user of the information received by the communication means (202).

9. The information notification apparatus (200) according to claim 8, **characterized by** further comprising identification information storing means (207) for storing identification information,
wherein the controlling means (208) controls the communication means (202) such that the communication means (202) receives identification information from the information providing apparatus (100) before receiving the information therefrom, and also controls the communication means (202) such that the communication means (202) receives the information from the information providing apparatus (100) if the identification information received from the information providing apparatus (100) and the identification information stored in the identification information storing means (207) correspond to each other.

10. The information notification apparatus (200) according to claim 8, **characterized by** further comprising identification information storing means (207) for storing identification information,
wherein the controlling means (208) controls the communication means (202) such that the communication means (202) transmits the identification information stored in the identification information storing means (207) to the information providing apparatus (100) before receiving the information from the information providing apparatus (100).

11. The information notification apparatus (200) according to claim 8, being installed in a vehicle and **characterized by** further comprising stop detecting means (203) for detecting that the vehicle is stopped, and
if the stop detecting means (203) detects that the vehicle is stopped, the controlling means (208) controls the notification means (204) such that the notification means (204) notifies the user of the information received by the communication means (202).

12. The information notification apparatus (200) according to claim 8, **characterized by** further comprises:
information storing means (207) for storing the information received by the communication means (202); and
information controlling means (208) for updating the information that the information storing means (207) has stored with the information received by the communication means (202).

13. The information notification apparatus (200) according to claim 8, **characterized by** further comprising:
information storing means (207) for storing the information received by the communication means (202); and
information controlling means (208) for storing the information received by the communication means (202) in the information storing means (207), in addition to the information that the information storing means (207) has stored.

14. The information notification apparatus (200) according to claim 8, **characterized by** further comprising:
clocking means (208) for clocking a time; and
information storing means (207) for storing the information received by the communication means (202),
wherein the controlling means (208) compares time information included in the information stored in the information storing means (207) with the time clocked by the clocking means (208) and controls the notification means (204) such that the notification means (204) notifies the user of the information stored in the information storing means (207) in accordance with a result of the comparison.

15. An information providing apparatus (100) **characterized by** comprising:
communication means (102) for conducting radio communication with an information notification apparatus (200) configured to notify information;
storing means (106) for storing information; and
controlling means (107) for controlling the communication means (102) such that the communication means (102) transmits the information stored in the storing means (106) to the information notification apparatus (200) .

16. The information providing apparatus (100) according to claim 15, **characterized by** further comprising identification information storing means (106) for storing identification information,
wherein the controlling means (107) controls the communication means (102) such that the communication means (102) transmits the identification information stored in the identification information storing means (106) to the information notification apparatus (200) before transmission of the information stored in the storing means (106) is controlled.

17. The information providing apparatus (100) according to claim 15, **characterized by** further comprising identification information storing means (106) for storing identification information,
wherein the controlling means (107) controls the communication means (102) such that the communication means (102) receives identification information from the information notification apparatus (200) before transmitting the information, and also controls the communication means (102) such that the communication means (102) transmits the information stored in the storing means (106) to the information notification apparatus (200) if the identification information received from the information notification apparatus (200) and the identification information stored in the identification information storing means (106) correspond to each other.

18. The information providing apparatus (100) according to claim 15, **characterized by** further comprising base station communication means (101) for conducting radio communication with a base station connected to a network.
